(19) Europäisches Patentamt / European Patent Office / Office européen des brevets

(11) **EP 3 335 438 B1**

(12) **FASCICULE DE BREVET EUROPEEN**

(45) Date de publication et mention de la délivrance du brevet:
**26.06.2019 Bulletin 2019/26**

(21) Numéro de dépôt: **16763896.4**

(22) Date de dépôt: **08.08.2016**

(51) Int Cl.:
*H04W 4/00* *(2018.01)*    *H04W 72/04* *(2009.01)*

(86) Numéro de dépôt international:
**PCT/FR2016/052051**

(87) Numéro de publication internationale:
**WO 2017/025686 (16.02.2017 Gazette 2017/07)**

(54) **PROCÉDÉS D'ANALYSE DE RESSOURCES FRÉQUENTIELLES ET DE SÉLECTION DE FRÉQUENCE D'ÉMISSION DANS UN SYSTÈME DE COMMUNICATION SANS FIL**

METHODEN ZUR ANALYSE VON RESSOURCEN HÄUFIGKEIT UND PULSFREQUENZ AUSWAHL IN EINEM DRAHTLOSEN KOMMUNIKATIONSSYSTEM

METHOD OF ANALYSIS OF RESOURCES FREQUENCY AND SELECTING PULSE FREQUENCY IN A WIRELESS COMMUNICATION SYSTEM

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **12.08.2015 FR 1557691**

(43) Date de publication de la demande:
**20.06.2018 Bulletin 2018/25**

(73) Titulaire: **SIGFOX**
**31670 Labège (FR)**

(72) Inventeurs:
• **ANTOINE, Patrick**
**31270 Cugnaux (FR)**
• **FUMAT, Guillaume**
**31400 Toulouse (FR)**
• **MALLART, Raoul**
**75012 Paris (FR)**
• **BAILLS, Stéphane**
**31400 Toulouse (FR)**

(74) Mandataire: **Ipside**
**6, Impasse Michel Labrousse**
**31100 Toulouse (FR)**

(56) Documents cités:
**US-A1- 2013 155 879    US-A1- 2015 055 570**

• **TRAGOS ELIAS Z ET AL: "Cognitive radio inspired M2M communications", 2013 16TH INTERNATIONAL SYMPOSIUM ON WIRELESS PERSONAL MULTIMEDIA COMMUNICATIONS (WPMC), NICT, 24 juin 2013 (2013-06-24), pages 1-5, XP032493994, ISSN: 1347-6890 [extrait le 2013-10-02]**

**Description**

## DOMAINE TECHNIQUE

La présente invention appartient au domaine des télécommunications. Plus particulièrement, la présente invention concerne la gestion de ressources fréquentielles dans un système de communication sans fil comportant un réseau d'accès et des terminaux, et dans lequel la sélection des fréquences d'émission, sur lesquelles les terminaux émettent des messages montants à destination du réseau d'accès, est effectuée par lesdits terminaux.

## ÉTAT DE LA TECHNIQUE

La présente invention trouve une application particulièrement avantageuse, bien que nullement limitative, dans les systèmes de communication sans fil pour des applications du type M2M (acronyme anglo-saxon pour « Machine-to-Machine ») ou du type « Internet des objets » (« Internet of Things » ou IoT dans la littérature anglo-saxonne). Un exemple se trouve dans US 2013/155879.

Dans le contexte par exemple de l'IoT, chaque objet de la vie de tous les jours a vocation à devenir un objet communiquant, et est à cet effet équipé d'un terminal adapté à émettre des données à destination d'un réseau d'accès. On comprend cependant que, dans la mesure du possible, le coût du terminal ne doit pas impacter de façon significative celui de l'objet auquel il est ajouté, afin de pouvoir rendre communiquant beaucoup d'objets de la vie de tous les jours. Par conséquent, la complexité des terminaux doit être réduite au maximum, afin d'en réduire le coût de fabrication.

A cet effet, dans un système de communication sans fil pour l'IoT, les terminaux ne sont préférentiellement pas synchronisés en temps et en fréquences avec le réseau d'accès, et décident seuls des instants d'émission et des fréquences d'émission de messages montants à destination dudit réseau d'accès, à l'intérieur d'une bande fréquentielle prédéterminée, dite « bande de multiplexage ». La complexité repose donc principalement sur le réseau d'accès, qui doit être capable de recevoir des messages montants émis à des instants d'émission arbitraires et sur des fréquences d'émission arbitraires à l'intérieur de la bande de multiplexage, tandis que les terminaux peuvent être simples et peu coûteux à fabriquer.

En outre, les terminaux émettent de préférence sans vérifier la disponibilité de la fréquence d'émission sélectionnée, afin de réduire les mesures à effectuer et la consommation électrique associée.

Pour réduire les coûts de mise en oeuvre d'un système de communication sans fil pour l'IoT, il est également avantageux d'utiliser une bande de multiplexage libre de droits. Par exemple, la bande ISM (« Industrial, Scientific and Médical ») comporte des bandes fréquentielles dites libres en ce qu'elles peuvent être utilisées sans autorisation administrative préalable, sous réserve de respecter certaines contraintes réglementaires.

Il en résulte cependant que le niveau d'interférences à l'intérieur de la bande de multiplexage peut être important. Par conséquent, si le terminal sélectionne une fréquence d'émission sans effectuer de mesures préalables, ladite fréquence d'émission peut présenter un niveau d'interférences élevé, de sorte que le message montant émis ne sera pas détecté par le réseau d'accès.

Afin de pallier ce problème, le terminal peut cependant sélectionner régulièrement une nouvelle fréquence d'émission, afin de réduire la probabilité que tous les messages montants dudit terminal ne soient émis sur des fréquences d'émission présentant des niveaux d'interférences élevés.

Si, de manière générale, les systèmes de communication sans fil pour l'IoT peuvent tolérer que certains messages montants puissent être manqués par le réseau d'accès, il existe néanmoins des applications pour lesquelles il peut être nécessaire d'assurer un niveau minimal de qualité de service.

Par exemple, il peut être nécessaire d'assurer qu'au moins un message montant puisse être reçu par le réseau d'accès sur une période de durée prédéterminée. Dans le cas par exemple d'une télé-relève de compteurs de gaz, d'eau, d'électricité, etc., la réception d'au moins un message montant sur une période d'un mois peut s'avérer suffisante. Dans le cas d'une télésurveillance de bâtiments ou de maisons, et notamment en cas d'intrusion ou de fuite d'eau ou de gaz, il peut être nécessaire d'assurer qu'au moins un message montant puisse être reçu sur une période beaucoup plus courte, par exemple inférieure à une heure.

## EXPOSÉ DE L'INVENTION

La présente invention a pour objectif de remédier à tout ou partie des limitations des solutions de l'art antérieur, notamment celles exposées ci-avant, en proposant une solution qui permette d'assurer dans certains cas un niveau minimal de qualité de service, tout en conservant des terminaux simples et peu coûteux à fabriquer.

A cet effet, et selon un premier aspect, l'invention concerne un procédé d'analyse, par un réseau d'accès d'un système de communication sans fil, de ressources fréquentielles à l'intérieur d'une bande de multiplexage prédéterminée, ledit système de communication sans fil comportant au moins un terminal configuré pour sélectionner une fréquence d'émission, à l'intérieur de la bande de multiplexage, sur laquelle émettre un message montant à destination du réseau d'accès, comportant :

- l'estimation, pour au moins une station de base du réseau d'accès, de capacités de détection de messages montants dans respectivement des sous-bandes fréquentielles différentes à l'intérieur de la bande de multiplexage,
- l'évaluation, pour chaque sous-bande fréquentielle, d'un critère prédéterminé de qualité de service en fonction de la capacité de détection estimée pour ladite sous-bande fréquentielle,
- l'émission, par le réseau d'accès, d'une carte spectrale de qualité de service pour ladite station de base, représentative des sous-bandes fréquentielles pour lesquelles le critère de qualité de service a été vérifié et des sous-bandes fréquentielles pour lesquelles ledit critère de qualité de service n'a pas été vérifié.

Ainsi, le procédé d'analyse repose, du côté du réseau d'accès, sur l'estimation de capacités de détection, pour au moins une station de base du réseau d'accès, dans des sous-bandes fréquentielles différentes de la bande de multiplexage. Chaque capacité de détection est représentative, pour la sous-bande fréquentielle considérée et la station de base considérée, de la probabilité qu'un message montant, émis par le terminal sur une fréquence d'émission à l'intérieur de cette sous-bande fréquentielle, puisse être détecté par cette station de base.

Ensuite, le réseau d'accès détermine les capacités de détection pour lesquelles un critère prédéterminé de qualité de service, associé à un niveau prédéterminé de qualité de service, est vérifié. Le réseau d'accès émet ensuite au terminal une carte spectrale de qualité de service représentative des sous-bandes fréquentielles pour lesquelles le critère de qualité de service est vérifié et de celles pour lesquelles le critère de qualité de service n'est pas vérifié. En d'autres termes, la carte spectrale de qualité de service indique les sous-bandes fréquentielles à privilégier pour l'émission de messages montants pour assurer un niveau prédéterminé de qualité de service.

L'émission de la carte spectrale de qualité de service, plutôt que d'émettre directement les capacités de détection, permet de réduire la quantité de données à émettre. En effet, la quantité de données requise pour encoder la carte spectrale de qualité de service est limitée, de l'ordre de $N_{SB}$ bits, $N_{SB}$ étant le nombre de sous-bandes fréquentielles considérées à l'intérieur de la bande de multiplexage.

Le terminal continue donc, comme c'est le cas dans l'art antérieur, à décider seul sur quelle fréquence d'émission émettre un message montant, sans avoir à s'associer préalablement à une station de base en vue de se faire attribuer par celle-ci une ressource fréquentielle. Par contre, grâce à l'émission par le réseau d'accès de la carte spectrale de qualité de service, la sélection effectuée par le terminal peut privilégier certaines sous-bandes fréquentielles s'il est nécessaire d'assurer un niveau prédéterminé de qualité de service.

L'impact sur les terminaux est limité dans la mesure où, pour de nombreuses applications, il est déjà requis pour les terminaux de pouvoir recevoir des messages descendants émis par le réseau d'accès (par exemple pour reconfigurer un terminal, pour commander un actionneur relié audit terminal, etc.). En outre, la quantité de données à recevoir étant faible, l'impact sur la consommation électrique des terminaux est limité.

Dans des modes particuliers de mise en oeuvre, le procédé d'analyse peut comporter en outre l'une ou plusieurs des caractéristiques suivantes, prises isolément ou selon toutes les combinaisons techniquement possibles.

Dans des modes particuliers de mise en oeuvre, le procédé d'analyse comporte l'évaluation, pour chaque sous-bande fréquentielle, d'au moins deux critères prédéterminés de qualité de service différents en fonction de la capacité de détection estimée pour ladite sous-bande fréquentielle, et l'émission d'au moins deux cartes spectrales de qualité de service associées respectivement auxdits critères de qualité de service différents.

De telles dispositions permettent d'assurer des niveaux de qualité de service différents, qui peuvent être associés respectivement à des applications différentes (par exemple télé-relève et télésurveillance), à des groupes de terminaux différents, etc.

Dans des modes particuliers de mise en oeuvre, la capacité de détection dans une sous-bande fréquentielle pour une station de base est estimée en fonction d'un signal global représentatif de l'ensemble des signaux radioélectriques reçus par ladite station de base dans ladite sous-bande fréquentielle sur une fenêtre temporelle, et comporte :

- le calcul d'un spectrogramme représentatif des niveaux de puissance du signal global associés respectivement à différentes fréquences dans la sous-bande fréquentielle et à différents instants dans la fenêtre temporelle,
- pour au moins un niveau de puissance des messages montants, dit « niveau de référence », et en considérant des messages montants de même largeur spectrale, égale à une largeur spectrale de référence prédéfinie, et de même durée, égale à une durée de référence prédéfinie : le calcul d'un nombre maximal $N_D$ de messages montants pouvant être positionnés sur le spectrogramme sans interférer entre eux, dans des positions respectives pour lesquelles le niveau de référence vérifie un critère prédéterminé de détection par rapport au niveau de puissance local du signal global,
- l'estimation de la capacité de détection pour le niveau de référence en fonction du nombre maximal $N_D$ calculé pour ledit niveau de référence.

Dans des modes particuliers de mise en oeuvre, l'estimation de la capacité de détection pour une sous-bande fréquentielle comporte la détection, dans le signal global, de messages montants émis par des terminaux du système de communication sans fil, et la compensation de la réduction de la capacité de détection induite par la présence desdits messages montants dans ledit signal global.

Dans des modes particuliers de mise en oeuvre, au moins une carte spectrale de qualité de service est émise par une station de base sous la forme d'un signal de diffusion à destination d'une pluralité de terminaux.

Dans des modes particuliers de mise en oeuvre, au moins une carte spectrale de qualité de service est émise par une station de base sous la forme d'une communication point à point à destination d'un terminal particulier.

Dans des modes particuliers de mise en oeuvre, lorsque plusieurs stations de base reçoivent des messages montants dudit terminal particulier, seule l'une desdites stations de base émet la carte spectrale de qualité de service à destination dudit terminal particulier.

Dans des modes particuliers de mise en oeuvre, le procédé d'analyse comporte la sélection de l'une des stations de base recevant les messages montants dudit terminal particulier, et seule la carte spectrale de qualité de service déterminée pour la station de base sélectionnée est émise à destination dudit terminal particulier.

Dans des modes particuliers de mise en oeuvre, le procédé d'analyse comporte la détermination de cartes spectrales de qualité de service pour tout ou partie des stations de base recevant les messages montants dudit terminal particulier, et une combinaison desdites cartes spectrales de qualité de service déterminées est émise à destination dudit terminal particulier.

Selon un second aspect, la présente invention concerne une station de base d'un système de communication sans fil, comportant des moyens configurés pour mettre en oeuvre un procédé d'analyse selon l'un quelconque des modes de mise en oeuvre de l'invention.

Selon un troisième aspect, la présente invention concerne un réseau d'accès d'un système de communication sans fil, comportant des moyens configurés pour mettre en oeuvre un procédé d'analyse selon l'un quelconque des modes de mise en oeuvre de l'invention.

Selon un quatrième aspect, la présente invention concerne un procédé de sélection, par un terminal d'un système de communication sans fil, d'une fréquence d'émission sur laquelle émettre un message montant à destination d'un réseau d'accès dudit système de communication sans fil, comportant :

- la réception d'au moins une carte spectrale de qualité de service émise par le réseau d'accès conformément à l'un quelconque des modes de mise en oeuvre de l'invention,
- la sélection, en fonction de la carte spectrale de qualité de service reçue, de la fréquence d'émission à l'intérieur d'une sous-bande fréquentielle de la bande de multiplexage pour laquelle le critère de qualité de service a été vérifié.

Dans des modes particuliers de mise en oeuvre, le procédé de sélection peut comporter en outre l'une ou plusieurs des caractéristiques suivantes, prises isolément ou selon toutes les combinaisons techniquement possibles.

Dans des modes particuliers de mise en oeuvre, le procédé de sélection comporte la réception de plusieurs cartes spectrales de qualité de service émises par le réseau d'accès, associées à des niveaux de qualité de service respectifs différents, et la fréquence d'émission du message montant est sélectionnée en fonction de la carte spectrale de qualité de service associée au niveau de qualité de service correspondant à un niveau de qualité de service requis pour le message montant à émettre.

Dans des modes particuliers de mise en oeuvre, la sélection de la fréquence d'émission comporte l'itération d'une génération aléatoire d'une fréquence candidate à l'intérieur de la bande de multiplexage jusqu'à obtenir une fréquence candidate se trouvant à l'intérieur d'une sous-bande fréquentielle pour laquelle le critère de qualité de service a été vérifié.

Dans des modes particuliers de mise en oeuvre, lorsque le terminal reçoit des cartes spectrales de qualité de service de stations de base différentes du réseau d'accès, associées à un même niveau de qualité de service, la fréquence d'émission est sélectionnée en fonction d'une combinaison desdites cartes spectrales de qualité de service reçues.

Dans des modes particuliers de mise en oeuvre, lorsque le terminal reçoit des cartes spectrales de qualité de service de stations de base différentes du réseau d'accès, associées à un même niveau de qualité de service, la fréquence d'émission est sélectionnée en fonction d'une carte spectrale de qualité de service sélectionnée parmi lesdites cartes spectrales de qualité de service reçues.

Selon un cinquième aspect, la présente invention concerne un terminal d'un système de communication sans fil, comportant des moyens configurés pour mettre en oeuvre un procédé de sélection selon l'un quelconque des modes de mise en oeuvre de l'invention.

## PRÉSENTATION DES FIGURES

L'invention sera mieux comprise à la lecture de la description suivante, donnée à titre d'exemple nullement limitatif, et faite en se référant aux figures qui représentent :

- Figure 1 : une représentation schématique d'un système de communication sans fil,
- Figure 2 : un diagramme illustrant les principales étapes d'un procédé d'analyse de ressources fréquentielles,
- Figure 3 : un diagramme représentant les principales étapes d'un mode préféré de mise en oeuvre pour l'estimation d'une capacité de détection d'une sous-bande fréquentielle,
- Figure 4 : un exemple de spectrogramme calculé à partir d'un signal global mesuré dans une sous-bande fréquentielle,
- Figure 5 : des représentations schématiques de zones disponibles du spectrogramme de la figure 4, pour des niveaux de puissance différents des messages montants reçus,
- Figure 6 : un diagramme illustrant les principales étapes d'un procédé de sélection de fréquence d'émission.

Dans ces figures, des références identiques d'une figure à une autre désignent des éléments identiques ou analogues. Pour des raisons de clarté, les éléments représentés ne sont pas à l'échelle, sauf mention contraire.

## DESCRIPTION DÉTAILLÉE DE MODES DE RÉALISATION

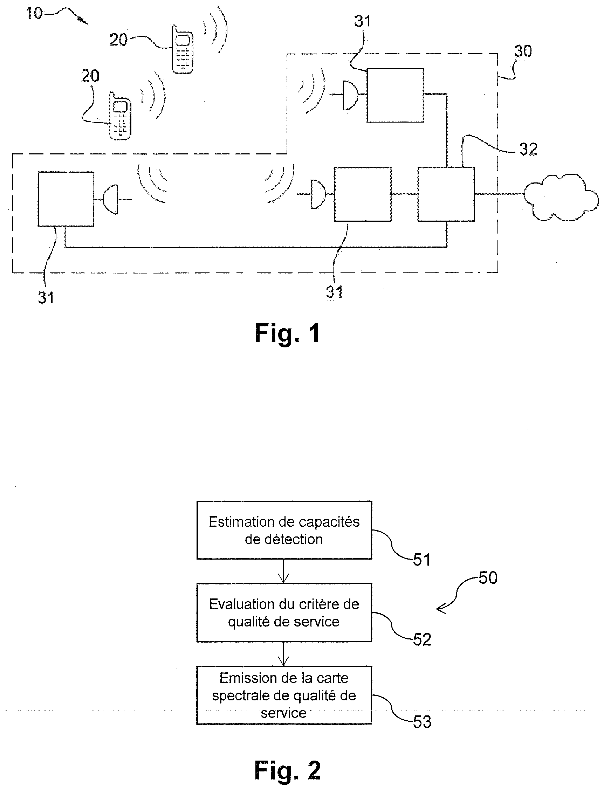

La figure 1 représente schématiquement un système 10 de communication sans fil, comportant plusieurs terminaux 20 et un réseau d'accès 30 comportant plusieurs stations de base 31.

Les terminaux 20 et les stations de base 31 du réseau d'accès 30 échangent des données sous la forme de signaux radioélectriques. Par « signal radioélectrique », on entend une onde électromagnétique se propageant via des moyens non filaires, dont les fréquences sont comprises dans le spectre traditionnel des ondes radioélectriques (quelques hertz à plusieurs centaines de gigahertz).

Les terminaux 20 sont adaptés à émettre des messages montants sur un lien montant à destination du réseau d'accès 30. Dans la suite de la description, on se place de manière non limitative dans le cas où le système 10 de communication sans fil est à bande ultra étroite. Par « bande ultra étroite » (« Ultra Narrow Band » ou UNB dans la littérature anglo-saxonne), on entend que le spectre fréquentiel instantané des signaux radioélectriques émis par les terminaux 20 est de largeur fréquentielle inférieure à un kilohertz.

Les messages montants d'un terminal 20 sont émis sur des fréquences d'émission qui sont sélectionnées par ledit terminal 20 à l'intérieur d'une bande fréquentielle prédéterminée, dite « bande de multiplexage ».

Plus particulièrement, le terminal 20 décide seul de la fréquence d'émission d'un message montant, c'est-à-dire qu'il émet un message montant sur la fréquence d'émission sélectionnée sans en demander préalablement l'autorisation auprès du réseau d'accès 30. Ainsi, le réseau d'accès 30 ne décide pas de l'allocation des ressources fréquentielles à l'intérieur de la bande de multiplexage, et ce sont les terminaux 20 qui décident d'émettre sur une fréquence d'émission plutôt qu'une autre.

Les terminaux 20 peuvent également, dans des modes particuliers de mise en oeuvre, décider des instants d'émission des messages montants et émettre les messages montants aux instants d'émission sélectionnés sans en demander préalablement l'autorisation auprès du réseau d'accès 30.

Ainsi, les terminaux n'ont pas besoin d'être synchronisés en fréquences et, le cas échéant, en temps avec le réseau d'accès 30. La complexité repose donc principalement sur le réseau d'accès 30, tandis que les terminaux 20 peuvent être simples et peu coûteux à fabriquer.

De préférence, pour limiter les mesures effectuées, un terminal 20 émet sur une fréquence d'émission sans en vérifier préalablement la disponibilité. Rien n'exclut cependant, suivant d'autres exemples, qu'un terminal 20 vérifie préalablement la disponibilité d'une fréquence d'émission, par exemple en mesurant le niveau de puissance sur cette fréquence d'émission et en le comparant à une valeur seuil prédéterminée.

Chaque station de base 31 est adaptée à recevoir les messages montants des terminaux 20 qui se trouvent à sa portée. Chaque message montant ainsi reçu est par exemple transmis à un serveur 32 du réseau d'accès 30, éventuellement accompagné d'autres informations comme un identifiant de la station de base 31 qui l'a reçu, le niveau de puissance mesuré dudit message montant reçu, la date de réception dudit message montant, etc. Le serveur 32 traite par exemple l'ensemble des messages montants reçus des différentes stations de base 31.

En outre, le réseau d'accès 30 est également adapté à émettre, par l'intermédiaire des stations de base 31, des messages descendants sur un lien descendant à destination des terminaux 20, lesquels sont adaptés à les recevoir. Les messages descendants sont par exemple émis à l'initiative du réseau d'accès 30. Dans un tel cas, les terminaux 20 doivent en permanence écouter le lien descendant, dans l'attente d'un éventuel message descendant. Alternativement ou en complément, le réseau d'accès 30 peut également émettre des messages descendants en réponse à des messages montants reçus. Par exemple, le réseau d'accès 30 peut répondre à chaque message montant reçu, ou répondre uniquement à certains messages montants reçus (par exemple répondre uniquement après avoir reçu un nombre prédéfini de messages montants d'un même terminal 20, ou répondre uniquement à des messages montants comportant une requête à cet effet, etc.).

Ainsi, suivant le cas considéré, un message descendant émis par le réseau d'accès 30 peut être un signal de diffusion globale (« broadcast » dans la littérature anglo-saxonne) ou de groupe (« multicast » dans la littérature anglo-saxonne), ou bien s'inscrire dans le cadre d'une communication point à point entre le réseau d'accès 30 et un terminal 20 particulier.

Tel qu'indiqué précédemment, la présente invention concerne la gestion des ressources fréquentielles dans le système 10 de communication sans fil, dans lequel les terminaux 20 décident seuls, et de préférence en effectuant le moins de mesures possibles, les fréquences d'émission sur lesquelles ils émettent des messages montants.

Plus particulièrement, la gestion des ressources fréquentielles est distribuée entre le réseau d'accès 30 et les terminaux 20, et se décompose principalement en :

- un procédé 50 d'analyse, par le réseau d'accès 30, des ressources fréquentielles à l'intérieur de la bande de multiplexage, selon lequel ledit réseau d'accès 30 génère des informations qu'il émet à destination des terminaux 20,
- un procédé 60 de sélection, par un terminal 20, d'une fréquence d'émission d'un message montant en fonction des informations reçues du réseau d'accès 30.

A) Procédé d'analyse de ressources fréquentielles

La figure 2 représente schématiquement les principales étapes d'un procédé 50 d'analyse des ressources fréquentielles à l'intérieur de la bande de multiplexage dans laquelle les terminaux 20 émettent des messages montants.

Tel qu'illustré par la figure 2, le procédé 50 d'analyse comporte principalement les étapes suivantes, qui seront décrites plus en détail ci-après :

- 51 estimation, pour au moins une station de base 31 du réseau d'accès 30, de capacités de détection par ladite station de base 31 de messages montants dans respectivement des sous-bandes fréquentielles différentes à l'intérieur de la bande de multiplexage,
- 52 évaluation, pour chaque sous-bande fréquentielle, d'un critère prédéterminé de qualité de service en fonction de la capacité de détection estimée pour ladite sous-bande fréquentielle,
- 53 émission, par le réseau d'accès 30, d'une carte spectrale de qualité de service pour ladite station de base 31, représentative des sous-bandes fréquentielles pour lesquelles le critère de qualité de service a été vérifié et des sous-bandes fréquentielles pour lesquelles ledit critère de qualité de service n'a pas été vérifié.

Parmi les différentes étapes illustrées par la figure 2, seule l'étape 53 d'émission de la carte spectrale de qualité de service doit nécessairement être exécutée au moins partiellement par une station de base 31. Les autres étapes illustrées par la figure 2 peuvent être exécutées par une ou plusieurs stations de base 31 et/ou par le serveur 32 du réseau d'accès 30. Par exemple, les étapes 51 d'estimation des capacités de détection et 52 d'évaluation du critère de détection peuvent être exécutées par le serveur 32, qui transmet ensuite chaque carte spectrale de qualité de service déterminée à la station de base 31 qui doit l'émettre.

Dans la suite de la description, on se place de manière non limitative dans le cas où chaque station de base 31 exécute l'ensemble des étapes illustrées par la figure 2, et émet la carte spectrale de qualité de service qui lui est associée sous la forme d'un signal de diffusion (globale ou de groupe).

Chaque station de base 31 comporte par exemple un circuit de traitement (non représenté sur les figures), comportant par exemple un ou plusieurs processeurs et des moyens de mémorisation (disque dur magnétique, mémoire électronique, disque optique, etc.) dans lesquels est mémorisé un produit programme d'ordinateur, sous la forme d'un ensemble d'instructions de code de programme à exécuter pour mettre en oeuvre les différentes étapes du procédé 50 d'analyse. Alternativement ou en complément, le circuit de traitement comporte un ou des circuits logiques programmables (FPGA, PLD, etc.), et/ou un ou des circuits intégrés spécialisés (ASIC), et/ou un ensemble de composants électroniques discrets, etc., adaptés à mettre en oeuvre tout ou partie desdites étapes du procédé 50 d'analyse.

Chaque station de base 31 comporte en outre des moyens de communication sans fil permettant à ladite station de base de recevoir des messages montants émis par des terminaux 20, et d'émettre des messages descendants à destination de terminaux 20 du système 10 de communication sans fil. Les moyens de communication sans fil se présentent de manière conventionnelle sous la forme d'un circuit radioélectrique comportant des équipements (antenne, amplificateur, oscillateur local, mélangeur, filtre analogique, etc.) considérés comme connus de l'homme de l'art.

En d'autres termes, chaque station de base 31 du réseau d'accès 30 comporte des moyens configurés de façon logicielle (produit programme d'ordinateur spécifique) et/ou matérielle (FPGA, PLD, ASIC, composants électroniques discrets, circuit radioélectrique, etc.) pour mettre en oeuvre les différentes étapes du procédé 50 d'analyse de ressources fréquentielles.

A.1) Estimation de capacités de détection

Au cours de l'étape 51 d'estimation, la station de base 31 estime des capacités de détection associées respectivement à différentes sous-bandes fréquentielles à l'intérieur de la bande de multiplexage.

Par exemple, la bande de multiplexage est décomposée en $N_{SB}$ sous-bandes fréquentielles, de préférence sans recouvrement entre elles et dont la réunion correspond à ladite bande de multiplexage. Dans le cas d'un système 10 de communication sans fil UNB, la largeur de la bande de multiplexage est par exemple de l'ordre de 200 kilohertz (kHz), et le nombre $N_{SB}$ de sous-bandes fréquentielles est par exemple égal à 32 ($N_{SB} = 32$), de sorte que chaque sous-bande fréquentielle est de largeur égale à 6.25 kHz.

Par conséquent, au cours de l'étape 51 d'estimation, on détermine au moins $N_{SB}$ capacités de détection. Par « capacité de détection », on entend une grandeur représentative, pour la sous-bande fréquentielle considérée et la station de base 31 considérée, de la probabilité qu'un message montant, émis par un terminal 20 sur une fréquence d'émission à l'intérieur de cette sous-bande fréquentielle, puisse être détecté par cette station de base 31.

On comprend que différentes méthodes sont possibles pour estimer de telles capacités de détection, et le choix d'une méthode particulière ne constitue qu'une variante d'implémentation de l'invention.

Suivant un premier exemple, la capacité de détection dans une sous-bande fréquentielle peut être estimée au moyen d'une analyse statistique des précédents messages montants détectés par la station de base 31 considérée. Par exemple, la capacité de détection est estimée comme étant le taux d'erreurs paquets (« Paquet Error Rate » ou PER dans la littérature anglo-saxonne) pour un niveau de référence $L_R$ de la puissance des messages montants reçus, c'est-à-dire le rapport entre :

- le nombre de messages montants reçus avec le niveau de référence $L_R$, dans la sous-bande fréquentielle considérée, mais qui présentent des erreurs de décodage,
- le nombre total de messages montants reçus avec le niveau de référence $L_R$ dans la sous-bande fréquentielle considérée.

Suivant un second exemple, la capacité de détection dans une sous-bande fréquentielle peut être estimée comme étant représentative d'un rapport signal sur bruit plus interférences dans la sous-bande fréquentielle considérée, pour un niveau de référence $L_R$ de la puissance des messages montants reçus. Par exemple, il est possible de mesurer le niveau de puissance $L_{NI}$ d'un signal global dans la sous-bande fréquentielle considérée sur une fenêtre temporelle, et d'estimer la capacité de détection associée à cette sous-bande fréquentielle comme étant le rapport $L_R/L_{NI}$.

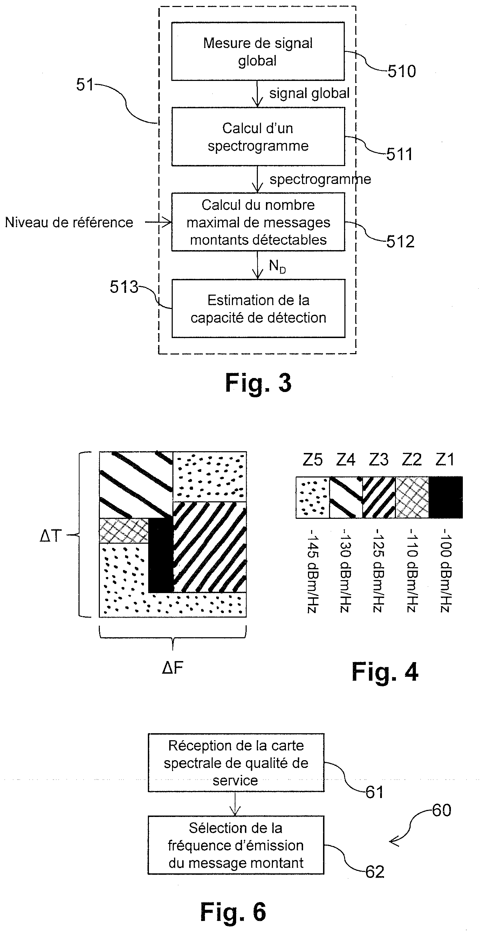

La figure 3 représente schématiquement les principales étapes d'un mode préféré de mise en oeuvre de l'étape 51 d'estimation de capacité de détection, dans lequel la capacité de détection dans une sous-bande fréquentielle est estimée en prenant en compte certaines caractéristiques des messages montants émis par les terminaux 20. Plus particulièrement, on considère, dans l'exemple illustré par la figure 3, une largeur spectrale de référence $\delta F$ et une durée de référence $\delta T$ desdits messages montants.

Par exemple, si les messages montants émis par les terminaux 20 ont tous la même largeur spectrale, alors celle-ci correspond à la largeur spectrale de référence $\delta F$. Si par contre plusieurs largeurs spectrales sont possibles pour les messages montants émis par lesdits terminaux 20, alors la largeur spectrale de référence $\delta F$ correspond par exemple à la largeur spectrale maximale desdits messages montants, ou à la largeur spectrale moyenne desdits messages montants, ou à la largeur spectrale minimale desdits messages montants, etc. Il est également possible d'estimer plusieurs valeurs de la capacité de détection associées respectivement aux différentes largeurs spectrales possibles des messages montants.

De manière analogue, si les messages montants émis par les terminaux 20 ont tous la même durée, alors celle-ci correspond à la durée de référence $\delta T$. Si par contre plusieurs durées sont possibles pour les messages montants émis par lesdits terminaux 20, alors la durée de référence $\delta T$ correspond par exemple à la durée maximale desdits messages montants, ou à la durée moyenne desdits messages montants, ou à la durée minimale desdits messages montants, etc. Il est également possible d'estimer plusieurs valeurs de la capacité de détection associées respectivement aux différentes durées possibles des messages montants.

Dans le cas considéré ici, à titre d'exemple non limitatif, d'un système 10 de communication sans fil UNB, la largeur spectrale de référence $\delta F$ est inférieure à un kilohertz, tandis que la durée de référence $\delta T$ est typiquement comprise entre quelques dixièmes de secondes et quelques secondes.

Tel qu'illustré par la figure 3, l'étape 51 d'estimation de capacité de détection comporte, pour chaque sous-bande fréquentielle de la bande de multiplexage, principalement des étapes de :

- 510 mesure d'un signal global représentatif de l'ensemble des signaux radioélectriques reçus, au niveau de la station de base 31 considérée, dans la sous-bande fréquentielle considérée sur une fenêtre temporelle,
- 511 calcul d'un spectrogramme du signal global,
- pour au moins un niveau de référence $L_R$ des messages montants : 512 calcul d'un nombre maximal $N_D$ de messages montants, reçus sans interférer entre eux, qui peuvent être détectés au niveau de la station de base 31 considérée,
- 513 estimation de la capacité de détection pour le niveau de référence $L_R$ en fonction du nombre maximal $N_D$ de messages montants détectés calculé pour ledit niveau de référence $L_R$.

Le spectrogramme du signal global représente la distribution spatiale de la puissance du signal global dans un espace de mesure bidimensionnel fréquence/temps, délimité par la sous-bande fréquentielle considérée et par la fenêtre temporelle considérée.

Les dimensions de l'espace de mesure correspondent donc à la largeur $\Delta F$ de la sous-bande fréquentielle considérée et à la durée $\Delta T$ de la fenêtre temporelle considérée. De préférence, la largeur $\Delta F$ de la sous-bande fréquentielle est supérieure à la largeur spectrale de référence $\delta F$ des messages montants, voire très supérieure à celle-ci (au moins un facteur cinq). Si la largeur spectrale de référence $\delta F$ est inférieure à un kilohertz, alors la largeur $\Delta F$ est par exemple supérieure à 5 kilohertz. De préférence, la durée $\Delta T$ de la fenêtre temporelle est supérieure à la durée de référence $\delta T$ des messages montants, voire très supérieure à celle-ci (au moins un facteur cinq). Si la durée de référence $\delta T$ est de l'ordre de la seconde, alors la durée $\Delta T$ est par exemple supérieure à 30 secondes, voire supérieure à quelques minutes. En pratique, plus la durée $\Delta T$ est grande et plus l'estimation de la capacité de détection est précise, en particulier en présence d'interférences intermittentes.

Par exemple, on définit un ensemble discret de fréquences à l'intérieur de la sous-bande fréquentielle considérée et un ensemble discret d'instants à l'intérieur de la fenêtre temporelle. Les fréquences de l'ensemble discret sont par exemple obtenues par échantillonnage de la sous-bande fréquentielle avec un pas fréquentiel prédéfini, et les instants de l'ensemble discret sont obtenus par échantillonnage de la fenêtre temporelle avec un pas temporel prédéfini. De préférence, le pas fréquentiel est égal ou inférieur à la largeur spectrale de référence $\delta F$ des messages montants et le pas temporel est égal ou inférieur à la durée de référence $\delta T$ desdits messages montants. On forme ainsi une grille de points dans l'espace de mesure, chaque point correspondant à une paire constituée par une fréquence et un instant de l'ensemble discret.

Le calcul du spectrogramme comporte par exemple le calcul de transformées de Fourier de blocs successifs d'échantillons du signal global numérisé et, éventuellement, le calcul en chaque point de la grille du module au carré de la valeur obtenue par transformée de Fourier.

Par conséquent, le spectrogramme associe, à chaque point de la grille, un niveau de puissance du signal global en ce point. Par « niveau de puissance », on entend toute grandeur représentative de la puissance du signal global. Dans la suite de la description, on se place de manière non limitative dans le cas où le niveau de puissance correspond à une densité de puissance par unité de fréquences, par exemple exprimée en dBm/Hz.

La figure 4 représente un exemple simplifié de spectrogramme. Tel qu'illustré par la figure 4, le spectrogramme comporte cinq zones différentes :

- une zone Z1 pour laquelle le niveau de puissance du signal global est égal ou inférieur à -100 dBm/Hz et supérieure à -110 dBm/Hz en chaque point de ladite zone Z1,
- une zone Z2 pour laquelle le niveau de puissance du signal global est égal ou inférieur à -110 dBm/Hz et supérieure à -125 dBm/Hz en chaque point de ladite zone Z2,
- une zone Z3 pour laquelle le niveau de puissance du signal global est égal ou inférieur à -125 dBm/Hz et supérieure à -130 dBm/Hz en chaque point de ladite zone Z3,
- une zone Z4 pour laquelle le niveau de puissance du signal global est égal ou inférieur à -130 dBm/Hz et supérieure à -145 dBm/Hz en chaque point de ladite zone Z4,
- une zone Z5, disjointe, pour laquelle le niveau de puissance du signal global est égal ou inférieur à -145 dBm/Hz en chaque point de ladite zone Z5.

Ensuite, au cours de l'étape 512, on considère des messages montants qui sont tous de même largeur spectrale, égale à la largeur spectrale de référence $\delta F$, et de même durée, égale à la durée de référence $\delta T$. En outre, on calcule le nombre maximal $N_D$ de messages montants, reçus avec le niveau de référence $L_R$ considéré, qui peuvent être positionnés sans interférer entre eux dans l'espace de mesure, et qui peuvent être en outre détectés compte tenu du signal global.

Par « sans interférer entre eux », on entend que, ainsi positionnés, aucun message montant n'empêche la détection d'un autre message montant. Dans la suite de la description, on se place de manière non limitative dans le cas où les messages montants, qui sont de dimensions $\delta F$ par $\delta T$ dans l'espace de mesure, sont positionnés de sorte qu'ils ne présentent aucun recouvrement entre eux dans ledit espace de mesure et n'interfèrent donc pas entre eux.

Rien n'exclut cependant, suivant d'autres exemples, d'autoriser un recouvrement partiel des messages montants entre eux, sur les bords des messages montants, si un tel recouvrement partiel n'empêche pas la détection des messages montants. Il est également possible d'ajuster la largeur spectrale de référence $\delta F$ et la durée de référence $\delta T$ pour tenir compte du recouvrement partiel en deçà duquel aucun message montant n'empêche la détection d'un autre message montant. Par exemple, si la largeur spectrale de référence $\delta F$ représente la largeur spectrale maximale des messages montants, alors il possible de choisir, pour ladite largeur spectrale de référence $\delta F$, une valeur légèrement inférieure à ladite largeur spectrale maximale pour tenir compte du recouvrement partiel en deçà duquel aucun message montant n'empêche la détection d'un autre message montant (idem pour la durée de référence $\delta T$ par rapport, par exemple, à la durée maximale des messages montants).

Par conséquent, un message montant, ainsi positionné dans l'espace de mesure, est détecté sauf si le niveau de puissance du signal global, au niveau de ce message montant, empêche cette détection. Ainsi, on considère qu'un message montant peut être détecté si le niveau de référence vérifie un critère de détection prédéfini par rapport au niveau de puissance local du signal global.

De manière générale, tout type de critère de détection adapté peut être mis en oeuvre. Dans des modes particuliers de mise en oeuvre, le critère de détection est considéré comme vérifié en un point p de l'espace de mesure si l'expression suivante est vérifiée :

$$L_R \geq L_G[p] + \Delta L \qquad (1)$$

expression en échelle logarithmique dans laquelle :

- $L_R$ correspond au niveau de référence des messages montants,
- $L_G[p]$ correspond au niveau de puissance $L_G$ du signal global calculé pour le point p, donné par le spectrogramme,
- $\Delta L$ correspond à un écart prédéfini de niveau de puissance.

Le niveau ($L_G[p] + \Delta L$) correspond par conséquent au niveau minimal à partir duquel le critère de détection est vérifié, c'est-à-dire à partir duquel le message montant considéré est susceptible d'être détecté.

Dans la suite de la description, on se place de manière non limitative dans le cas du critère de détection de l'expression (1) ci-dessus, en considérant un écart $\Delta L$ nul, c'est-à-dire qu'on considère qu'un message montant peut être détecté dès lors que le niveau de référence est égal ou supérieur au niveau de puissance local du signal global.

Pour un niveau de référence, le critère de détection permet donc de distinguer, dans l'espace de mesure, des zones, dites « zones disponibles » dans lesquelles le critère de détection est vérifié et les messages montants sont susceptibles d'être détectés, et des zones, dites « zones perturbées », dans lesquelles le critère de détection n'est pas vérifié.

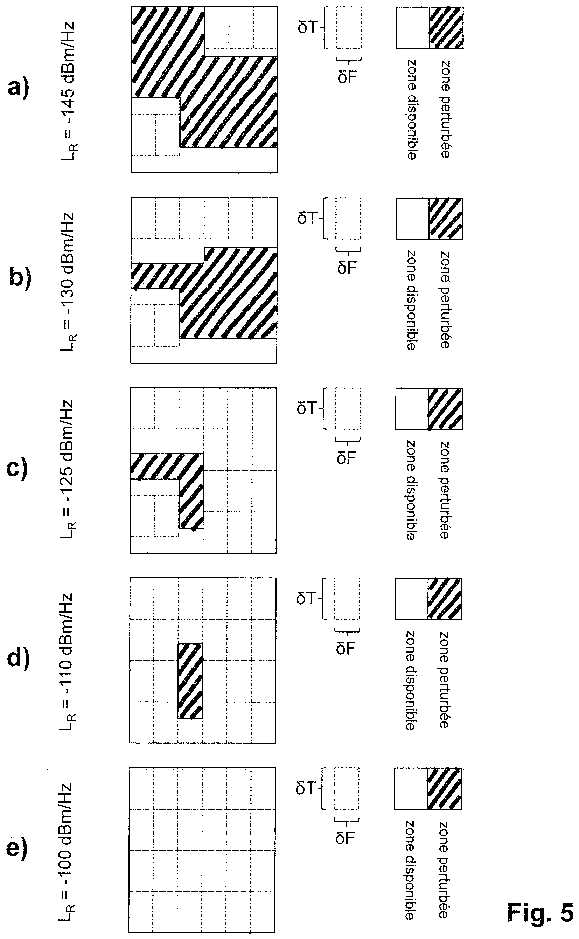

La figure 5 représente les zones disponibles (non hachurées) et les zones perturbées (hachurées) pour différentes valeurs du niveau de référence, dans le cas du spectrogramme illustré par la figure 4.

Plus particulièrement, dans la partie a) de la figure 5, le niveau de référence est -145 dBm/Hz, de sorte que, pour le critère de détection considéré, la zone disponible correspond à la zone Z5, tandis que la zone perturbée correspond à la réunion des zones Z1, Z2, Z3 et Z4.

Dans la partie b), le niveau de référence est -130 dBm/Hz, de sorte que la zone disponible correspond à la réunion des zones Z5 et Z4, tandis que la zone perturbée correspond à la réunion des zones Z1, Z2 et Z3.

Dans la partie c), le niveau de référence est -125 dBm/Hz, de sorte que la zone disponible correspond à la réunion des zones Z5, Z4 et Z3, tandis que la zone perturbée correspond à la réunion des zones Z1 et Z2.

Dans la partie d), le niveau de référence est -110 dBm/Hz, de sorte que la zone disponible correspond à la réunion des zones Z5, Z4, Z3 et Z2, tandis que la zone perturbée correspond à la zone Z1 uniquement.

Dans la partie e), le niveau de référence est -100 dBm/Hz, de sorte que la zone disponible correspond à la réunion des zones Z5, Z4, Z3, Z2 et Z1, c'est-à-dire tout l'espace de mesure.

Pour un niveau de référence particulier, le calcul du nombre maximal $N_D$ de messages montants pouvant être détectés revient donc à déterminer le nombre maximal de messages montants pouvant être placés à l'intérieur des zones disponibles, sans recouvrement entre eux compte tenu de la largeur spectrale de référence $\delta F$ et de la durée de référence $\delta T$.

La figure 5 représente schématiquement, en traits discontinus, les messages montants, de dimensions $\delta F$ par $\delta T$, placés sans recouvrement entre eux dans les zones disponibles, pour la configuration optimale c'est-à-dire celle permettant de placer le maximum de messages montants. Tel qu'illustré par la figure 5 :

- pour le niveau de référence -145 dBm/Hz (partie a) : $N_D = 5$,
- pour le niveau de référence -130 dBm/Hz (partie b) : $N_D = 8$,

- pour le niveau de référence -125 dBm/Hz (partie c) : $N_D$ = 17,
- pour le niveau de référence -110 dBm/Hz (partie d) : $N_D$ = 21,
- pour le niveau de référence -100 dBm/Hz (partie e), le nombre maximal $N_D$ est égal à 24, et correspond au nombre maximal de messages montants de dimensions $\delta F$ par $\delta T$ pouvant être placés sans recouvrement eux dans l'espace de mesure.

Le nombre maximal $N_D$ de messages montants pouvant être détectés, pour un niveau de référence $L_R$ donné, peut être estimé selon toute méthode adaptée. Si le pas fréquentiel est égal à la largeur spectrale de référence $\delta F$ et si le pas temporel est égal à la durée de référence $\delta T$, alors il suffit de compter le nombre de points à l'intérieur des zones disponibles. Si ce n'est pas le cas, alors un message montant est par exemple considéré comme pouvant être détecté si le critère de détection est vérifié en chaque point recouvert par ce message montant, c'est-à-dire sur toute la largeur spectrale ($\delta F$) du message montant et sur toute la durée ($\delta T$) dudit message montant.

Dans le cas d'un système 10 de communication sans fil UNB, la largeur spectrale de référence $\delta F$ est très faible, de sorte que le pas fréquentiel peut être choisi égal à ladite largeur spectrale de référence $\delta F$. Le pas temporel peut par contre être choisi inférieur à la durée de référence $\delta T$, de sorte qu'un message montant recouvre M points successifs de l'espace de mesure suivant l'axe temporel. Dans un tel cas, il est par exemple possible d'effectuer une analyse en chaque fréquence de l'ensemble discret, en parcourant des axes temporels, associés respectivement aux différentes fréquences, depuis le début de la fenêtre temporelle jusqu'à sa fin. Suivant chaque axe temporel, on incrémente un compteur, initialisé à zéro, à chaque fois que le critère de détection est vérifié, et on remet ledit compteur à zéro à chaque fois que le critère de détection n'est pas vérifié. Lorsque que le critère de détection est vérifié pour M points successifs suivant un axe temporel, le compteur correspondant est remis à zéro, et un compteur global de messages montants détectés, initialisé à zéro, est incrémenté. Lorsque la fin de la fenêtre temporelle est atteinte, le nombre maximal $N_D$ est donné par la valeur du compteur global.

Le nombre maximal $N_D$ de messages montants pouvant être détectés pour le niveau de référence $L_R$ considéré est donc calculé en supposant que toutes les positions de l'espace de mesure sont possibles pour la réception d'un message montant. Il peut s'agir d'une approximation forte dans certains systèmes de communication sans fil. Toutefois, une telle hypothèse est bien vérifiée, notamment, dans les systèmes de communication sans fil UNB dans lesquels les terminaux 20 émettent des messages sur des fréquences centrales arbitraires et à des instants arbitraires.

Au cours de l'étape 513, la capacité de détection pour le niveau de référence $L_R$ est estimée en fonction du nombre maximal $N_D$ de messages montants détectés calculé pour ledit niveau de référence $L_R$. Par exemple, dans un mode de mise en oeuvre particulièrement simple, la capacité de détection est directement égale au nombre maximal $N_D$.

Dans des modes préférés de mise en oeuvre, la capacité de détection est en outre estimée en fonction d'un nombre maximal $N_R$ de messages montants pouvant être reçus sans interférer entre eux dans l'espace de mesure, en supposant que tout l'espace de mesure est une zone disponible.

Le nombre maximal $N_R$ de messages montants pouvant être reçus est par exemple calculé en fonction de la largeur spectrale de référence $\delta F$ et de la durée de référence $\delta T$ desdits messages montants, par exemple selon l'expression suivante pour des messages montants positionnés sans recouvrement entre eux :

$$N_R = E[\Delta F/\delta F]\cdot E[\Delta T/\delta T] \qquad (2)$$

expression dans laquelle E[x] correspond à la partie entière du nombre réel x.

La capacité de détection est alors estimée, au cours de l'étape 513, en fonction à la fois du nombre maximal $N_D$ de messages montants pouvant être détectés sans recouvrement entre eux et du nombre maximal $N_R$ de messages montants pouvant être reçus sans recouvrement entre eux.

Par exemple, la capacité de détection peut être estimée comme étant égale au rapport $N_D/N_R$. Ainsi, la capacité de détection est toujours comprise entre 0 et 1, de sorte qu'il est aisé de comparer notamment, pour un même niveau de référence $L_R$, les capacités de détection dans des sous-bandes fréquentielles différentes. Dans l'exemple illustré par la figure 5, le nombre maximal $N_R$ est donné par la partie e) et est égal à 24. Par conséquent :

- pour le niveau de référence -145 dBm/Hz (partie a) : $N_D/N_R$ = 0.21,
- pour le niveau de référence -130 dBm/Hz (partie b) : $N_D/N_R$ = 0.33,
- pour le niveau de référence -125 dBm/Hz (partie c) : $N_D/N_R$ = 0.71,
- pour le niveau de référence -110 dBm/Hz (partie d) : $N_D/N_R$ = 0.87,
- pour le niveau de référence -100 dBm/Hz (partie e) : $N_D/N_R$ = 1.

Il est à noter qu'il est possible que le signal global comporte mesuré sur la fenêtre temporelle comporte des messages montants émis des terminaux 20 du système 10 de communication sans fil UNB, et qui par conséquent influencent la valeur de la capacité de détection estimée. Deux approches différentes peuvent alors envisagées.

Selon une première approche, on considère que les messages montants, émis par des terminaux 20 et présents dans le signal global, doivent être conservés lors de l'estimation de la capacité de détection, car ceux-ci réduisent la disponibilité de la sous-bande fréquentielle considérée pour recevoir d'autres messages montants. Dans un tel cas, la capacité de détection d'une sous-bande fréquentielle est estimée comme décrit ci-dessus, sans chercher à différencier, dans le signal global, les messages montants et les interférences. Il est d'ailleurs à noter que l'influence des messages montants, émis par des terminaux 20 du système 10 de communication sans fil UNB au cours de la fenêtre temporelle de mesure du signal global, peut être réduite en considérant une durée $\Delta T$ de la fenêtre temporelle très supérieure à la durée de référence $\delta T$ des messages (au moins un facteur cinq), voire significativement supérieure à celle-ci (au moins un facteur cent).

Selon une seconde approche, on considère que les messages montants, émis par des terminaux 20 et présents dans le signal global, doivent être écartés lors de l'estimation de la capacité de détection. Dans des modes particuliers de mise en oeuvre, l'estimation de la capacité de détection pour une sous-bande fréquentielle comporte la compensation de la réduction de la capacité de détection induite par la présence desdits messages montants dans ledit signal global. Par exemple, en considérant une largeur $\Delta F$ de la sous-bande fréquentielle égale à 6.25 kHz, une durée $\Delta T$ de la fenêtre temporelle égale à 10 minutes, une largeur spectrale de référence $\delta F$ égale à 100 Hz et une durée de référence $\delta T$ égale à 2 secondes, alors le nombre maximal $N_R$ est égal à 18750. Par conséquent, en considérant le critère de détection de l'expression (1) ci-dessus avec un écart $\Delta L$ nul, alors un message montant, reçu avec un niveau de puissance supérieur au niveau de référence $L_R$, entraîne une réduction de la capacité de détection de l'ordre de 1/18750, soit de l'ordre de 0.53 %. Ainsi, la capacité de détection pour le niveau de référence $L_R$ est par exemple calculée selon l'expression suivante :

$$\frac{N_D[L_R] + N_{MM}[L_R]}{N_R} \tag{3}$$

expression dans laquelle :

- $N_D[L_R]$ correspond au nombre maximal $N_D$ de messages montants pouvant être détectés pour le niveau de référence $L_R$,
- $N_{MM}[L_R]$ correspond au nombre de messages montants détectés dans le signal global utilisé, dont le niveau de puissance est supérieur au niveau de référence $L_R$.

Il est également possible de considérer différents niveaux de référence pour les messages montants. Dans ce cas, plusieurs capacités de détection sont estimées pour chaque sous-bande fréquentielle de la bande de multiplexage, associées respectivement aux différents niveaux de référence considérés pour les messages montants.

A.2) Evaluation du critère de qualité de service

Au cours de l'étape 52, on évalue, pour chaque sous-bande fréquentielle, si la capacité de détection estimée vérifie un critère prédéterminé de qualité de service, associé à un niveau prédéterminé de qualité de service.

Il est à noter que différents types de critères de qualité de service sont possibles, et le choix d'un type particulier de critère de qualité de service ne constitue qu'une variante d'implémentation de l'invention.

Dans des modes préférés de mise en oeuvre, l'évaluation du critère de qualité de service consiste à comparer la capacité de détection estimée à une valeur seuil prédéterminée. Dans le cas décrit précédemment où la capacité de détection est comprise entre 0 et 1, la valeur 1 correspondant à la capacité de détection maximale, le critère de qualité de service est considéré comme vérifié si la capacité de détection est supérieure à ladite valeur seuil prédéterminée.

La valeur seuil considérée peut être choisie de manière arbitraire, par exemple égale à 80%, ou encore être choisie de sorte à assurer la détection par le réseau d'accès 30 d'au moins un message montant d'un même terminal 20 sur une période de durée prédéterminée.

Par exemple, dans le cas de terminaux 20 mis en oeuvre pour la télé-relève de compteurs, la réception d'un message montant sur une période de 4 semaines peut s'avérer suffisante. Si on considère des terminaux 20 qui émettent un message montant par jour (soit 28 messages montants sur une période de 4 semaines) et en visant, pour chaque terminal 20, une probabilité de détection de 99.999% d'au moins un message montant toutes les 4 semaines, alors la capacité de détection $P_k[L_R]$ dans la sous-bande fréquentielle de rang k considérée ($1 \leq k \leq N_{SB}$) doit être telle que :

$$P_k\left[L_R\right] \geq 1 - \sqrt[28]{1 - 0.99999} \approx 33.7\%$$

Dans un tel cas, le critère de qualité de service est considéré comme vérifié, pour la sous-bande fréquentielle de rang k considérée, si la capacité de détection $P_k[L_R]$ estimée est égale ou supérieure à 33.7%.

Si on considère des terminaux 20 mis en oeuvre pour la télésurveillance de bâtiments, en particulier dans le cas où une anomalie a été détectée (intrusion, fuite d'eau ou de gaz), alors il peut s'avérer nécessaire de détecter au moins un message montant sur une période de 10 minutes. Si on considère des terminaux 20 qui émettent, en cas d'anomalie détectée, un message montant toutes les minutes et en visant, pour chaque terminal 20, une probabilité de détection de 99.9999% d'au moins un message montant sur une période de 10 minutes, alors la capacité de détection $P_k[L_R]$ dans la sous-bande fréquentielle de rang k considérée ($1 \leq k \leq N_{SB}$) doit être telle que :

$$P_k\left[L_R\right] \geq 1 - \sqrt[10]{1 - 0.999999} \approx 74.9\%$$

Dans un tel cas, le critère de qualité de service est considéré comme vérifié, pour la sous-bande fréquentielle de rang k considérée, si la capacité de détection $P_k[L_R]$ estimée est égale ou supérieure à 74.9%.

On comprend donc que, si l'on souhaite assurer la réception d'au moins un message montant sur une période de durée prédéterminée, la valeur seuil à considérer dépend du nombre de messages montants émis par unité de temps, qui peut varier d'une application à une autre (par exemple un message montant par jour dans le cas de la télé-relève de compteurs, un message montant par minute dans le cas de la télésurveillance de bâtiments).

Il est à noter que, de préférence, les terminaux 20 changent de fréquence d'émission à chaque émission d'un message montant. Les calculs ci-dessus restent cependant valables dans la mesure où chaque terminal 20 qui souhaite assurer un niveau prédéterminé de qualité de service ne choisira que des sous-bandes fréquentielles pour lesquelles le critère de qualité de service associé a été vérifié.

De manière plus générale, il est possible d'évaluer plusieurs critères prédéterminés de qualité de service, associés respectivement à des niveaux de qualité de service respectifs différents. Il est notamment possible de comparer la capacité de détection à deux valeurs seuils différentes, par exemple 33.7% et 74.9%, afin d'identifier les sous-bandes fréquentielles à privilégier pour des applications du type télé-relève de compteurs et les sous-bandes fréquentielles à privilégier pour des applications du type télésurveillance de bâtiments.

Dans le cas où plusieurs capacités de détection ont été estimées pour chaque sous-bande fréquentielle, associées respectivement à différents niveaux de référence, il est possible d'évaluer le critère de qualité de service, en fonction des capacités de détection estimées, pour chaque niveau de référence considéré pour les messages montants.

A.3) Emission de carte spectrale de qualité de service

Au cours de l'étape 53, la station de base 31 émet au moins une carte spectrale de qualité de service sous la forme d'un signal de diffusion global ou de groupe, associée à un niveau de référence $L_R$ de puissance de réception des messages montants et à un niveau prédéterminé de qualité de service.

Par « carte spectrale de qualité de service », on entend tout type d'information permettant à un terminal 20 ayant reçu ladite carte spectrale de qualité de service d'identifier les sous-bandes fréquentielles pour lesquelles le critère de qualité de service a été vérifié et les sous-bandes fréquentielles pour lesquelles ledit critère de qualité de service n'a pas été vérifié.

On comprend donc que différents formats sont possibles pour une telle carte spectrale de qualité de service, et le choix d'un format particulier ne constitue qu'une variante d'implémentation de l'invention.

Dans des modes particuliers de mise en oeuvre, la carte spectrale de qualité de service est par exemple émise sous la forme d'un mot de $N_{SB}$ bits associés respectivement aux $N_{SB}$ sous-bandes fréquentielles de la bande de multiplexage. Par exemple, dans ce mot de $N_{SB}$ bits, si le bit de rang k ($1 \leq k \leq N_{SB}$) est égal à 0, alors cela signifie que le critère de qualité de service n'a pas été vérifié pour la sous-bande fréquentielle de rang k ; s'il est égal à 1, alors cela signifie que le critère de qualité de service a été vérifié pour la sous-bande fréquentielle de rang k. Le mot de $N_{SB}$ bits peut être transmis en une seule fois, ou être transmis en plusieurs fois, c'est-à-dire décomposé en plusieurs parties émises dans des messages descendants différents.

Dans des modes particuliers de mise en oeuvre, une même station de base 31 peut émettre, sous la forme d'un signal de diffusion, plusieurs cartes spectrales de qualité de service. Par exemple, la station de base 31 peut émettre des cartes spectrales de qualité de service associées respectivement à des niveaux de qualité de service différents et/ou associées respectivement à des groupes de terminaux 20 différents. Par exemple, il est possible d'émettre :

- une première carte spectrale de qualité de service, à destination de terminaux 20 mis en oeuvre pour la télé-relève de compteurs (niveau de qualité de service requis : réception d'au moins un message montant par période de 4 semaines),

- une seconde carte spectrale de qualité de service, à destination de terminaux 20 mis en oeuvre pour la télésurveillance de bâtiments (niveau de qualité de service requis : réception d'au moins un message montant par période de 10 minutes).

En variante ou en complément, il est possible d'émettre plusieurs cartes spectrales de qualité de service associées à des niveaux de référence respectifs différents de la puissance de réception des messages montants.

De la même façon, plusieurs formats possibles peuvent être envisagés pour émettre plusieurs cartes spectrales de qualité de service, et le choix d'un format particulier ne constitue qu'une variante d'implémentation de l'invention. Dans des modes particuliers de mise en oeuvre, chaque message descendant comportant tout ou partie d'une carte spectrale de qualité de service peut comporter un identifiant du niveau de qualité de service associé, par exemple sous la forme d'un mot de $N_{ID}$ bits, $N_{ID}$ étant égal à $\log_2(N_{QoS})$, éventuellement arrondi au nombre entier supérieur si $N_{QoS}$, le nombre de niveaux de qualité de service différents, n'est pas une puissance de 2.

A.4) Variantes de mise en oeuvre du procédé d'analyse

Il est à noter que les modes de mise en oeuvre ci-dessus du procédé 50 d'analyse de ressources fréquentielles ont été décrits à titre d'exemples non limitatifs, et que des variantes sont par conséquent envisageables.

Notamment, l'invention a été décrite en considérant le cas où chaque station de base 31 émet, sous la forme d'un signal de diffusion, au moins une carte spectrale de qualité de service.

Rien n'exclut cependant, en complément ou en alternative, qu'au moins une station de base 31 émette au moins une carte spectrale de qualité de service sous la forme d'une communication point à point à destination d'un terminal 20 particulier. Dans des modes préférés de mise en oeuvre, la carte spectrale de qualité de service est émise en réponse à une requête de carte spectrale de qualité de service reçue dudit terminal 20 particulier. En effet, de telles dispositions permettent de limiter la durée pendant laquelle ledit terminal 20 particulier écoute le lien descendant, puisqu'il suffit alors d'écouter le lien descendant sur une fenêtre d'écoute prédéterminée par rapport au message montant émis par ledit terminal 20 particulier.

Il est à noter que les messages montants d'un terminal 20 particulier sont le plus souvent, dans un système 10 de communication sans fil UNB, reçus par plusieurs stations de base 31. Par conséquent, dans le cas d'une émission de la carte spectrale de qualité de service sous la forme d'une communication point à point, plusieurs approches différentes peuvent être envisagées pour :

- l'établissement de la carte spectrale de qualité de service destinée audit terminal 20 particulier,
- l'émission de ladite carte spectrale de qualité de service à destination dudit terminal 20 particulier.

En effet, on comprend que, en désignant par $N_{BS}$ le nombre de stations de base 31 qui reçoivent les messages montants du terminal 20 particulier, il est possible d'établir jusqu'à $N_{BS}$ cartes spectrales de qualité de service associées respectivement auxdites $N_{BS}$ stations de base 31.

Dans des modes préférés de mise en oeuvre, une seule carte spectrale de qualité de service, associée à un niveau de référence $L_R$ donné et un niveau de qualité de service donné, est émise à destination dudit terminal 20 particulier.

Suivant un premier exemple, le procédé 50 d'analyse comporte la sélection de l'une des $N_{BS}$ stations de base 31, par exemple celle qui reçoit les messages montants dudit terminal 20 particulier avec le niveau de puissance le plus élevé, et seule la carte spectrale de qualité de service déterminée pour la station de base sélectionnée est émise à destination du terminal 20 particulier.

Suivant un second exemple non limitatif, le procédé 50 d'analyse comporte la détermination de cartes spectrales de qualité de service pour tout ou partie des $N_{BS}$ stations de base 31, et une combinaison desdites cartes spectrales de qualité de service déterminées est émise à destination dudit terminal 20 particulier. La carte spectrale de qualité de service ainsi déterminée par combinaison correspond par exemple :

- à l'union des différentes cartes spectrales de qualité de service déterminées : le critère de qualité de service est alors considéré comme vérifié pour une sous-bande fréquentielle dès lors qu'il est vérifié pour au moins l'une des stations de base 31 considérées parmi les $N_{BS}$ stations de base 31,
- à l'intersection des différentes cartes spectrales de qualité de service déterminées : le critère de qualité de service n'est alors considéré comme vérifié pour une sous-bande fréquentielle que s'il est vérifié pour toutes les stations de base 31 considérées parmi les $N_{BS}$ stations de base 31.

Il est à noter que, dans les exemples ci-dessus, certaines étapes du procédé 50 d'analyse des ressources fréquentielles sont de préférence exécutées par le serveur 32. Par exemple, le serveur 32 peut déterminer la carte spectrale de qualité de service qui doit être émise à destination du terminal 20 particulier.

En outre, dans le cas où les messages montants d'un terminal 20 particulier sont reçus par $N_{BS}$ stations de base 31 différentes, il est possible d'utiliser jusqu'à $N_{BS}$ stations de base 31 différentes pour l'émission d'une carte spectrale de qualité de service à destination dudit terminal 20 particulier.

Dans des modes préférés de mise en oeuvre, seule l'une desdites $N_{BS}$ stations de base 31 émet la carte spectrale de qualité de service à destination dudit terminal 20 particulier.

De telles dispositions permettent de limiter les interférences générées sur le lien descendant pour l'émission d'une carte spectrale de qualité de service à destination dudit terminal 20 particulier.

En outre, dans un système 10 de communication sans fil UNB, les stations de base 31 sont de préférence du type semi-duplex (« half-duplex » dans la littérature anglo-saxonne), afin de limiter les coûts de déploiement. Le cas échéant, une station de base 31 qui émet n'est pas capable de recevoir des messages montants. Il est donc avantageux de limiter au maximum le nombre de stations de base 31 qui émettent la carte spectrale de qualité de service à destination du terminal 20 particulier, afin de réduire au maximum le nombre de stations de base 31 qui sont indisponibles pour recevoir des messages montants d'autres terminaux 20.

Dans un tel cas, le procédé 50 d'analyse comporte de préférence la sélection de l'une des $N_{BS}$ stations de base 31, et seule la station de base 31 sélectionnée émet la carte spectrale de qualité de service à destination dudit terminal 20 particulier, sous la forme d'une communication point à point.

La station de base 31 sélectionnée est par exemple celle qui reçoit les messages montants dudit terminal 20 particulier avec le niveau de puissance le plus élevé.

Suivant un autre exemple non limitatif, la station de base 31 sélectionnée est celle permettant en théorie, dans le cas stations de base 31 de type semi-duplex, de minimiser le nombre de messages montants susceptibles d'être manqués par le réseau d'accès 30. Dans un tel cas, la station de base 31 qui émet la carte spectrale de qualité de service n'est pas nécessairement celle qui dispose de la meilleure qualité de lien descendant avec le terminal 20 particulier. En outre, la station de base 31 sélectionnée n'est pas nécessairement celle pour laquelle la carte spectrale de qualité de service émise a été déterminée, c'est-à-dire que la station de base 31 sélectionnée peut émettre une carte spectrale de qualité de service associée à une autre des $N_{BS}$ stations de base 31.

Il est à noter que, dans les exemples ci-dessus, certaines étapes du procédé 50 d'analyse des ressources fréquentielles sont de préférence exécutées par le serveur 32. Par exemple, le serveur 32 peut sélectionner la station de base 31 et transmettre à celle-ci la carte spectrale de qualité de service à émettre à destination du terminal 20 particulier.

A.5) Choix du niveau de référence

Tel qu'indiqué précédemment, une carte spectrale de qualité de service, émise par une station de base 31, est par exemple associée à un niveau de référence $L_R$ de la puissance de réception des messages montants.

Le niveau de référence $L_R$ peut être choisi de manière arbitraire, par exemple dans le cas où la carte spectrale de qualité de service est émise sous la forme d'un signal de diffusion globale.

Suivant d'autres exemples, le niveau de référence peut être choisi en fonction de mesures effectuées sur des messages montants reçus de terminaux 20 du système 10 de communication sans fil UNB.

Par exemple, dans le cas où la carte spectrale de qualité de service est destinée à un terminal 20 particulier, par exemple émise sous la forme d'une communication point à point, alors il est avantageux d'optimiser ladite carte spectrale de qualité de service pour ledit terminal 20 particulier considéré. Dans des modes préférés de mise en oeuvre, le niveau de référence $L_R$ considéré est donc calculé en fonction des niveaux de puissance des messages montants reçus dudit terminal 20 particulier. En considérant que les messages montants dudit terminal 20 particulier sont reçus avec un niveau de puissance de valeur moyenne $\mu_0$ et d'écart-type $\sigma_0$, le niveau de référence $L_R$ considéré est par exemple égal à la valeur ($\mu_0 - d_0 \cdot \sigma_0$), expression dans laquelle $d_0$ est un nombre entier naturel. Alternativement, le niveau de référence $L_R$ considéré est par exemple égal à la valeur ($v_0 - d_0 \cdot \sigma_0$), expression dans laquelle $v_0$ correspond à la valeur médiane des niveaux de puissance des messages montants reçus dudit terminal 20 particulier.

De même, dans le cas où la carte spectrale de qualité de service est destinée à un groupe particulier de terminaux 20, par exemple émise sous la forme d'un signal de diffusion de groupe, il est avantageux d'optimiser ladite carte spectrale de qualité de service pour les terminaux 20 appartenant au groupe particulier considéré. Dans des modes préférés de mise en oeuvre, le niveau de référence $L_R$ considéré est donc calculé en fonction des niveaux de puissance des messages montants reçus de l'ensemble des terminaux 20 du groupe particulier. En considérant que ces messages montants sont reçus avec un niveau de puissance de valeur moyenne $\mu_1$ et d'écart-type $\sigma_1$, le niveau de référence $L_R$ considéré est par exemple égal à la valeur ($\mu_1 - d_1 \cdot \sigma_1$), expression dans laquelle $d_1$ est un nombre entier naturel. Alternativement, le niveau de référence $L_R$ considéré est par exemple égal à la valeur ($v_1 - d_1 \cdot \sigma_1$), expression dans laquelle $v_1$ correspond à la valeur médiane des niveaux de puissance des messages montants reçus des terminaux 20 dudit groupe particulier considéré.

B) Procédé de sélection d'une fréquence d'émission

La présente invention concerne également un procédé 60 de sélection, mis en oeuvre par un terminal 20, d'une fréquence d'émission sur laquelle émettre un message montant à destination du réseau d'accès 30.

A cet effet, le terminal 20 comporte un circuit de traitement (non représenté sur les figures), comportant un ou plusieurs processeurs et des moyens de mémorisation (disque dur magnétique, mémoire électronique, disque optique, etc.) dans lesquels est mémorisé un produit programme d'ordinateur, sous la forme d'un ensemble d'instructions de code de programme à exécuter pour mettre en oeuvre les différentes étapes du procédé 60 de sélection de fréquence d'émission. Alternativement ou en complément, le circuit de traitement comporte un ou des circuits logiques programmables (FPGA, PLD, etc.), et/ou un ou des circuits intégrés spécialisés (ASIC), et/ou un ensemble de composants électroniques discrets, etc., adaptés à mettre en oeuvre tout ou partie desdites étapes du procédé 60 de sélection de fréquence d'émission.

Le terminal 20 comporte en outre des moyens de communication sans fil permettant audit terminal d'émettre des messages montants et de recevoir des messages descendants sous la forme de signaux radioélectriques. Les moyens de communication sans fil se présentent de manière conventionnelle sous la forme d'un circuit radioélectrique comportant des équipements (antenne, amplificateur, oscillateur local, mélangeur, filtre analogique, etc.) considérés comme connus de l'homme de l'art.

En d'autres termes, le terminal 20 comporte un ensemble de moyens configurés de façon logicielle (produit programme d'ordinateur spécifique) et/ou matérielle (FPGA, PLD, ASIC, composants électroniques discrets, circuit radioélectrique, etc.) pour mettre en oeuvre les différentes étapes du procédé 60 de sélection.

La figure 6 représente schématiquement les principales étapes d'un procédé 60 de sélection de fréquence d'émission, lesquelles sont :

- 61 réception d'au moins une carte spectrale de qualité de service émise par le réseau d'accès 30,
- 62 sélection, en fonction de la carte spectrale de qualité de service reçue, de la fréquence d'émission à l'intérieur d'une sous-bande fréquentielle de la bande de multiplexage pour laquelle le critère de qualité de service a été vérifié.

Le terminal 20 continue donc, comme c'est le cas dans l'art antérieur, à décider seul sur quelle fréquence d'émission émettre un message montant. Par contre, grâce à la réception de la carte spectrale de qualité de service, la sélection effectuée par le terminal 20 peut privilégier certaines sous-bandes fréquentielles de la bande de multiplexage s'il est nécessaire d'assurer un niveau prédéterminé de qualité de service.

Par exemple, la sélection de la fréquence d'émission met en oeuvre un générateur aléatoire de fréquences candidates distribuées de préférence de manière uniforme à l'intérieur de la bande de multiplexage. Le générateur aléatoire génère successivement des fréquences candidates jusqu'à obtenir une fréquence candidate se trouvant à l'intérieur d'une sous-bande fréquentielle pour laquelle le critère de qualité de service a été vérifié, qui est utilisée comme fréquence d'émission pour le message montant.

Si le terminal 20 reçoit plusieurs cartes spectrales de qualité de service associées à des niveaux de qualité de service respectifs différents, la fréquence d'émission du message montant est avantageusement sélectionnée en fonction de la carte spectrale de qualité de service associée au niveau de qualité de service correspondant à un niveau de qualité de service requis pour le message montant à émettre.

Dans le cas où le terminal 20 reçoit des cartes spectrales de qualité de service de stations de base 31 différentes, associées à un même niveau de référence $L_R$ et à un même niveau de qualité de service, plusieurs approches peuvent être envisagées.

Suivant un premier exemple, la fréquence d'émission est sélectionnée en fonction d'une combinaison de tout ou partie desdites cartes spectrales de qualité de service reçues, par exemple l'union ou l'intersection de tout ou partie desdites cartes spectrales de qualité de service reçues.

Suivant un second exemple non limitatif, la fréquence d'émission est sélectionnée en fonction d'une carte spectrale de qualité de service sélectionnée parmi lesdites cartes spectrales de qualité de service reçues, par exemple celle qui a été reçue avec le niveau de puissance le plus élevé.

De manière plus générale, il est à noter que les modes de mise en oeuvre et de réalisation considérés ci-dessus ont été décrits à titre d'exemples non limitatifs, et que d'autres variantes sont par conséquent envisageables.

Notamment, l'invention a été décrite en considérant principalement un système de communication sans fil UNB. Rien n'exclut cependant, suivant d'autres exemples, de considérer d'autres types de systèmes de communication sans fil.

**Revendications**

1. Procédé (50) d'analyse, par un réseau d'accès (30) d'un système (10) de communication sans fil, de ressources fréquentielles à l'intérieur d'une bande de multiplexage prédéterminée, ledit système de communication sans fil comportant au moins un terminal (20) configuré pour sélectionner une fréquence d'émission, à l'intérieur de la bande de multiplexage, sur laquelle émettre un message montant à destination du réseau d'accès (30), **caractérisé en ce qu'**il comporte :

   - l'estimation (51), pour au moins une station de base (31) du réseau d'accès (30), de capacités de détection de messages montants dans respectivement des sous-bandes fréquentielles différentes à l'intérieur de la bande de multiplexage,
   - l'évaluation (52), pour chaque sous-bande fréquentielle, d'un critère prédéterminé de qualité de service en fonction de la capacité de détection estimée pour ladite sous-bande fréquentielle,
   - l'émission (53), par le réseau d'accès (30), d'une carte spectrale de qualité de service pour ladite station de base (31), représentative des sous-bandes fréquentielles pour lesquelles le critère de qualité de service a été vérifié et des sous-bandes fréquentielles pour lesquelles ledit critère de qualité de service n'a pas été vérifié.

2. Procédé (50) selon la revendication 1, comportant l'évaluation, pour chaque sous-bande fréquentielle, d'au moins deux critères prédéterminés de qualité de service différents en fonction de la capacité de détection estimée pour ladite sous-bande fréquentielle, et l'émission d'au moins deux cartes spectrales de qualité de service associées respectivement auxdits critères de qualité de service différents.

3. Procédé (50) selon l'une des revendications précédentes, dans lequel la capacité de détection dans une sous-bande fréquentielle pour une station de base (31) est estimée en fonction d'un signal global représentatif de l'ensemble des signaux radioélectriques reçus par ladite station de base dans ladite sous-bande fréquentielle sur une fenêtre temporelle, et comporte :

   - le calcul (511) d'un spectrogramme représentatif des niveaux de puissance du signal global associés respectivement à différentes fréquences dans la sous-bande fréquentielle et à différents instants dans la fenêtre temporelle,
   - pour au moins un niveau de puissance des messages montants, dit « niveau de référence », et en considérant des messages montants de même largeur spectrale, égale à une largeur spectrale de référence prédéfinie, et de même durée, égale à une durée de référence prédéfinie : le calcul (512) d'un nombre maximal $N_D$ de messages montants pouvant être positionnés sur le spectrogramme sans interférer entre eux, dans des positions respectives pour lesquelles le niveau de référence vérifie un critère prédéterminé de détection par rapport au niveau de puissance local du signal global,
   - l'estimation (513) de la capacité de détection pour le niveau de référence en fonction du nombre maximal $N_D$ calculé pour ledit niveau de référence.

4. Procédé (50) selon la revendication 3, dans lequel l'estimation (51) de la capacité de détection pour une sous-bande fréquentielle comporte la détection, dans le signal global, de messages montants émis par des terminaux (20) du système (10) de communication sans fil, et la compensation de la réduction de la capacité de détection induite par la présence desdits messages montants dans ledit signal global.

5. Procédé (50) selon l'une des revendications précédentes, dans lequel au moins une carte spectrale de qualité de service est émise par une station de base sous la forme d'un signal de diffusion à destination d'une pluralité de terminaux.

6. Procédé (50) selon l'une des revendications 1 à 4, dans lequel au moins une carte spectrale de qualité de service est émise par une station de base sous la forme d'une communication point à point à destination d'un terminal particulier.

7. Procédé (50) selon la revendication 6, dans lequel, lorsque plusieurs stations de base reçoivent des messages montants dudit terminal particulier, seule l'une desdites stations de base émet la carte spectrale de qualité de service à destination dudit terminal particulier.

8. Procédé (50) selon l'une des revendications 6 à 7, comportant la sélection de l'une des stations de base recevant les messages montants dudit terminal particulier, et dans lequel seule la carte spectrale de qualité de service déterminée pour la station de base sélectionnée est émise à destination dudit terminal particulier.

9. Procédé (50) selon l'une des revendications 6 à 7, comportant la détermination de cartes spectrales de qualité de service pour tout ou partie des stations de base recevant les messages montants dudit terminal particulier, et dans lequel une combinaison desdites cartes spectrales de qualité de service déterminées est émise à destination dudit terminal particulier.

10. Station de base (31) d'un système (10) de communication sans fil, **caractérisée en ce qu'**elle comporte des moyens configurés pour mettre en oeuvre un procédé (50) d'analyse selon l'une des revendications précédentes.

11. Réseau d'accès (30) d'un système (10) de communication sans fil, **caractérisé en ce qu'**il comporte des moyens configurés pour mettre en oeuvre un procédé (50) d'analyse selon l'une des revendications 1 à 9

12. Procédé (60) de sélection, par un terminal (20) d'un système (10) de communication sans fil, d'une fréquence d'émission sur laquelle émettre un message montant à destination d'un réseau d'accès (30) dudit système (10) de communication sans fil, **caractérisé en ce qu'**il comporte :

- la réception (61) d'au moins une carte spectrale de qualité de service émise, par le réseau d'accès (30), conformément à l'une des revendications 1 à 9,
- la sélection (62), en fonction de la carte spectrale de qualité de service reçue, de la fréquence d'émission à l'intérieur d'une sous-bande fréquentielle de la bande de multiplexage pour laquelle le critère de qualité de service a été vérifié.

13. Procédé (60) selon la revendication 12, comportant la réception de plusieurs cartes spectrales de qualité de service émises par le réseau d'accès (30), associées à des niveaux de qualité de service respectifs différents, et dans lequel la fréquence d'émission du message montant est sélectionnée en fonction de la carte spectrale de qualité de service associée au niveau de qualité de service correspondant à un niveau de qualité de service requis pour le message montant à émettre.

14. Procédé (60) selon l'une des revendications 12 à 13, dans lequel la sélection (62) de la fréquence d'émission comporte l'itération d'une génération aléatoire d'une fréquence candidate à l'intérieur de la bande de multiplexage jusqu'à obtenir une fréquence candidate se trouvant à l'intérieur d'une sous-bande fréquentielle pour laquelle le critère de qualité de service a été vérifié.

15. Procédé (60) selon l'une des revendications 12 à 14, dans lequel, lorsque le terminal (20) reçoit des cartes spectrales de qualité de service de stations de base (31) différentes du réseau d'accès (30), associées à un même niveau de qualité de service, la fréquence d'émission est sélectionnée en fonction d'une combinaison desdites cartes spectrales de qualité de service reçues.

16. Procédé (60) selon l'une des revendications 12 à 14, dans lequel, lorsque le terminal (20) reçoit des cartes spectrales de qualité de service de stations de base (31) différentes du réseau d'accès (30), associées à un même niveau de qualité de service, la fréquence d'émission est sélectionnée en fonction d'une carte spectrale de qualité de service sélectionnée parmi lesdites cartes spectrales de qualité de service reçues.

17. Terminal (20) d'un système (10) de communication sans fil, **caractérisé en ce qu'**il comporte des moyens configurés pour mettre en oeuvre un procédé (60) de sélection selon l'une des revendications 12 à 16.

**Patentansprüche**

1. Verfahren (50) zum Analysieren, durch ein Zugangsnetz (30) eines drahtlosen Kommunikationssystems (10), von Frequenzressourcen in Inneren eines vorbestimmten Multiplexing-Bandes, wobei das drahtlose Kommunikationssystem mindestens ein Endgerät (20) umfasst, das dafür konfiguriert ist, eine Sendefrequenz im Inneren des Multiplexing-Bandes auszuwählen, auf der eine Uplink-Nachricht an das Zugangsnetz (30) gesendet werden soll, **dadurch gekennzeichnet, dass** es umfasst:

- Schätzen (51), für mindestens eine Basisstation (31) des Zugangsnetzes (30), von Kapazitäten zur Detektion von Uplink-Nachrichten in jeweils unterschiedlichen Frequenzteilbändern im Inneren des Multiplexing-Bandes,

- Beurteilen (52), für jedes Frequenzteilband, eines vorbestimmten Dienstgütekriteriums abhängig von der für das Frequenzteilband geschätzten Detektionskapazität,
- Senden (53), durch das Zugangsnetz (30), einer Dienstgüte-Spektralkarte für die Basisstation (31), die für die Frequenzteilbänder, für die das Dienstgütekriterium verifiziert wurde, und für die Frequenzteilbänder, für die das Dienstgütekriterium nicht verifiziert wurde, repräsentativ ist.

2. Verfahren (50) nach Anspruch 1, das das Beurteilen, für jedes Frequenzteilband, von mindestens zwei unterschiedlichen vorbestimmten Dienstgütekriterien abhängig von der für das Frequenzteilband geschätzten Detektionskapazität, und das Senden von mindestens zwei Dienstgüte-Spektralkarten, die jeweils mit den unterschiedlichen Dienstgütekriterien assoziiert sind, umfasst.

3. Verfahren (50) nach einem der vorstehenden Ansprüche, wobei die Detektionskapazität in einem Frequenzteilband für eine Basisstation (31) abhängig von einem Gesamtsignal geschätzt wird, das für die Gesamtheit der Funksignale repräsentativ ist, die in einem Zeitfenster von der Basisstation in dem Frequenzteilband empfangenen werden, und umfasst:

- Berechnen (511) eines Spektrogramms, das für die Leistungspegel des Gesamtsignals repräsentativ ist, die jeweils mit unterschiedlichen Frequenzen im Frequenzteilband und mit unterschiedlichen Zeitpunkten im Zeitfenster assoziiert sind,
- für mindestens einen Leistungspegel der Uplink-Nachrichten, der als "Referenzpegel" bezeichnet wird, und unter Berücksichtigung der Uplink-Nachrichten derselben Spektralbreite, die gleich einer vordefinierten Referenzspektralbreite ist, und derselben Dauer, die gleich einer vordefinierten Referenzdauer ist: Berechnen (512) einer maximalen Anzahl $N_D$ von Uplink-Nachrichten, die ohne miteinander zu interferieren in jeweiligen Positionen im Spektrogramm positioniert werden können, für die der Referenzpegel ein vorbestimmtes Detektionskriterium in Bezug auf den lokalen Leistungspegel des Gesamtsignals verifiziert,
- Schätzen (513) der Detektionskapazität für den Referenzpegel abhängig von der für den Referenzpegel berechneten maximalen Anzahl $N_D$.

4. Verfahren (50) nach Anspruch 3, wobei das Schätzen (51) der Detektionskapazität für ein Frequenzteilband das Detektieren, im Gesamtsignal, von Uplink-Nachrichten, die von Endgeräten (20) des drahtlosen Kommunikationssystems (10) gesendet werden, und das Kompensieren der Reduzierung der Detektionskapazität umfasst, die durch das Vorhandensein der Uplink-Nachrichten im Gesamtsignal induziert wird.

5. Verfahren (50) nach einem der vorstehenden Ansprüche, wobei mindestens eine Dienstgüte-Spektralkarte von einer Basisstation in der Form eines Rundfunksignals an eine Vielzahl von Endgeräten gesendet wird.

6. Verfahren (50) nach einem der Ansprüche 1 bis 4, wobei mindestens eine Dienstgüte-Spektralkarte von einer Basisstation in der Form einer Punkt-zu-Punkt-Kommunikation an ein bestimmtes Endgerät gesendet wird.

7. Verfahren (50) nach Anspruch 6, wobei, wenn mehrere Basisstationen Uplink-Nachrichten des bestimmten Endgeräts empfangen, nur die eine der Basisstationen die Dienstgüte-Spektralkarte an das bestimmte Endgerät sendet.

8. Verfahren (50) nach einem der Ansprüche 6 bis 7, das das Auswählen der einen der Basisstationen umfasst, die die Uplink-Nachrichten des bestimmen Endgeräts empfängt, und wobei nur die Dienstgüte-Spektralkarte, die für die ausgewählte Basisstation bestimmt wurde, an das bestimmte Endgerät gesendet wird.

9. Verfahren (50) nach einem der Ansprüche 6 bis 7, das das Bestimmen von Dienstgüte-Spektralkarten für alle oder einen Teil der Basisstationen umfasst, die die Uplink-Nachrichten des bestimmten Endgeräts empfangen, und wobei eine Kombination der Dienstgüte-Spektralkarten, die bestimmt wurden, an das bestimmte Endgerät gesendet wird.

10. Basisstation (31) eines drahtlosen Kommunikationssystems (10), **dadurch gekennzeichnet, dass** sie Mittel umfasst, die dafür konfiguriert sind, ein Analyseverfahren (50) nach einem der vorstehenden Ansprüche umzusetzen.

11. Zugangsnetz (30) eines drahtlosen Kommunikationssystems (10), **dadurch gekennzeichnet, dass** es Mittel umfasst, die dafür konfiguriert sind, ein Analyseverfahren (50) nach einem der Ansprüche 1 bis 9 umzusetzen.

12. Verfahren (60) zur Auswahl, durch ein Endgerät (20) eines drahtlosen Kommunikationssystems (10), einer Sendefrequenz, auf der eine Uplink-Nachricht an ein Zugangsnetz (30) des drahtlosen Kommunikationssystems (10) gesendet werden soll, **dadurch gekennzeichnet, dass** es umfasst:

- Empfangen (61) von mindestens einer Dienstgüte-Spektralkarte, die vom Zugangsnetz (30) gesendet wird, gemäß einem der Ansprüche 1 bis 9,
- Auswählen (62), abhängig von der empfangenen Dienstgüte-Spektralkarte, der Sendefrequenz im Inneren eines Frequenzteilbandes des Multiplexing-Bandes, für das das Dienstgütekriterium verifiziert wurde.

13. Verfahren (60) nach Anspruch 12, das das Empfangen von mehreren vom Zugangsnetz (30) gesendeten Dienstgüte-Spektralkarten umfasst, die mit jeweiligen unterschiedlichen Dienstgüteniveaus assoziiert sind, und wobei die Sendefrequenz der Uplink-Nachricht abhängig von der Dienstgüte-Spektralkarte ausgewählt wird, die mit dem Dienstgüteniveau assoziiert ist, das einem für die zu sendende Uplink-Nachricht erforderlichen Dienstgüteniveau entspricht.

14. Verfahren (60) nach einem der Ansprüche 12 bis 13, wobei das Auswählen (62) der Sendefrequenz das Iterieren einer Zufallserzeugung einer Kandidatenfrequenz im Inneren des Multiplexing-Bandes umfasst, bis eine Kandidatenfrequenz erhalten wird, die sich im Inneren eines Frequenzteilbandes befindet, für das das Dienstgütekriterium verifiziert wurde.

15. Verfahren (60) nach einem der Ansprüche 12 bis 14, wobei, wenn das Endgerät (20) Dienstgüte-Spektralkarten von unterschiedlichen Basisstationen (31) des Zugangsnetzes (30) empfängt, die mit ein und demselben Dienstgüteniveau assoziiert sind, die Sendefrequenz abhängig von einer Kombination der empfangenen Dienstgüte-Spektralkarten ausgewählt wird.

16. Verfahren (60) nach einem der Ansprüche 12 bis 14, wobei, wenn das Endgerät (20) Dienstgüte-Spektralkarten von unterschiedlichen Basisstationen (31) des Zugangsnetzes (30) empfängt, die mit ein und demselben Dienstgüteniveau assoziiert sind, die Sendefrequenz abhängig von einer aus den empfangenen Dienstgüte-Spektralkarten ausgewählten Dienstgüte-Spektralkarte ausgewählt wird.

17. Endgerät (20) eines drahtlosen Kommunikationssystems (10), **dadurch gekennzeichnet, dass** es Mittel umfasst, die dafür konfiguriert sind, ein Auswahlverfahren (60) nach einem der Ansprüche 12 bis 16 umzusetzen.

## Claims

1. Method (50) for analysing, via an access network (30) of a wireless communication system (10), frequency resources within a predetermined multiplexing band, said wireless communication system comprising at least one terminal (20) configured to select a transmission frequency, within the multiplexing band, on which to transmit an uplink message to the access network (30), **characterised in that** it comprises:

- estimating (51), for at least one base station (31) of the access network (30), capabilities to detect uplink messages in respectively different frequency sub-bands within the multiplexing band,
- assessing (52), for each frequency sub-band, a predetermined service quality criterion depending on the detection capability estimated for said frequency sub-band,
- transmitting (53), via the access network (30), a spectral map of service quality for said base station (31), representative of the frequency sub-bands for which the service quality criterion has been verified and the frequency sub-bands for which said service quality criterion has not been verified.

2. Method (50) according to claim 1, comprising the assessing, for each frequency sub-band, at least two different predetermined service quality criteria depending on the detection capability estimated for said frequency sub-band, and the transmitting of at least two spectral maps of service quality associated respectively with said different service quality criteria.

3. Method (50) according to one of the preceding claims, wherein the capability to detect in a frequency sub-band for a base station (31) is estimated according to a global signal representative of all of the radio signals received by said base station in said frequency sub-band over a time window, and comprises:

- calculating (511) a spectrogram representative of the power levels of the global signal associated respectively with different frequencies in the frequency sub-band and at different instants in the time window,
- for at least one power level of the uplink messages, referred to as "reference level", and by considering uplink messages of the same spectral width, equal to a spectral width of a predefined reference, and of the same duration, equal to a duration of a predefined reference: calculating (512) a maximum number $N_D$ of uplink messages that can be positioned on the spectrogram without interfering with each other, in respective positions for which the reference level verifies a predetermined detection criterion with respect to the local power level of the global signal,

- estimating (513) the detection capability for the reference level depending on the maximum number $N_D$ calculated for said reference level.

4. Method (50) according to claim 3, wherein the estimating (51) of the detection capability for a frequency sub-band comprises the detecting, in the global signal, of uplink messages transmitted by terminals (20) of the wireless communication system (10), and the compensating for the reduction in the detection capability induced by the presence of said uplink messages in said global signal.

5. Method (50) according to one of the preceding claims, wherein at least one spectral map of service quality is transmitted by a base station in the form of a broadcast signal to a plurality of terminals.

6. Method (50) according to one of claims 1 to 4, wherein at least one spectral map of service quality is transmitted by a base station in the form of a point-to-point communication to a particular terminal.

7. Method (50) according to claim 6, wherein, when several base stations receive uplink messages from said particular terminal, only one of said base stations transmits the spectral map of service quality to said particular terminal.

8. Method (50) according to one of claims 6 to 7, comprising selecting one of the base stations receiving the uplink messages from said particular terminal, and wherein only the spectral map of service quality determined for the selected base station is transmitted to said particular terminal.

9. Method (50) according to one of claims 6 to 7, comprising determining spectral maps of service quality for all or a portion of the base stations receiving the uplink messages from said particular terminal, and wherein a combination of said determined spectral maps of service quality is transmitted to said particular terminal.

10. Base station (31) of a wireless communication system (10), **characterised in that** it comprises means configured to implement a method (50) for analysing according to one of the preceding claims.

11. Access network (30) of a wireless communication system (10), **characterised in that** it comprises means configured to implement a method (50) for analysing according to one of claims 1 to 9.

12. Method (60) for selecting, by a terminal (20) of a wireless communication system (10), a transmission frequency on which to transmit an uplink message to an access network (30) of said wireless communication system (10), **characterised in that** it comprises:

- receiving (61) at least one spectral map of service quality transmitted, by the access network (30), in accordance with one of claims 1 to 9,
- selecting (62), depending on the spectral map of service quality received, the transmission frequency within a frequency sub-band of the multiplexing band for which the service quality criterion has been verified.

13. Method (60) according to claim 12, comprising the receiving of several spectral maps of service quality transmitted by the access network (30), associated with different respective service quality levels, and wherein the transmission frequency of the uplink message is selected depending on the spectral map of service quality associated with the level of service quality that corresponds to a level of service quality that is required for the uplink message to be transmitted.

14. Method (60) according to one of claims 12 to 13, wherein selecting (62) the transmission frequency comprises the iterating of a random generation of a candidate frequency within the multiplexing band until a candidate frequency is obtained that is within a frequency sub-band for which the service quality criterion has been verified.

15. Method (60) according to one of claims 12 to 14, wherein, when the terminal (20) receives spectral maps of service quality of different base stations (31) of the access network (30), associated with the same level of service quality, the transmission frequency is selected depending on a combination of said spectral maps of service quality received.

**16.** Method (60) according to one of claims 12 to 14, wherein, when the terminal (20) receives spectral maps of service quality from different base stations (31) of the access network (30), associated with the same level of service quality, the transmission frequency is selected depending on a spectral map of service quality selected from said spectral maps of service quality received.

**17.** Terminal (20) of a wireless communication system (10), **characterised in that** it comprises means configured to implement a method (60) for selecting according to one of claims 12 to 16.

**Fig. 1**

Estimation de capacités
de détection — 51

Evaluation du critère de
qualité de service — 52

Emission de la carte
spectrale de qualité de
service — 53

50

**Fig. 2**

Mesure de signal global ⟶ 510

51

↓ signal global

Calcul d'un spectrogramme ⟶ 511

↓ spectrogramme

Niveau de référence ⟶ Calcul du nombre maximal de messages montants détectables ⟶ 512

↓ $N_D$

513 ⟶ Estimation de la capacité de détection

## Fig. 3

$\Delta T$

$\Delta F$

Z5   Z4   Z3   Z2   Z1

-145 dBm/Hz   -130 dBm/Hz   -125 dBm/Hz   -110 dBm/Hz   -100 dBm/Hz

## Fig. 4

Réception de la carte spectrale de qualité de service ⟶ 61

60

↓

Sélection de la fréquence d'émission du message montant ⟶ 62

## Fig. 6

a) $L_R = -145$ dBm/Hz

b) $L_R = -130$ dBm/Hz

c) $L_R = -125$ dBm/Hz

d) $L_R = -110$ dBm/Hz

e) $L_R = -100$ dBm/Hz

$\delta T$

$\delta F$

zone perturbée

zone disponible

Fig. 5

**EP 3 335 438 B1**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 2013155879 A